# EUROPÄISCHE PATENTANMELDUNG

(11) **EP 1 170 642 A2**
(43) Veröffentlichungstag der Anmeldung: **09.01.2002**
(21) Anmeldenummer: 01108805.1
(22) Anmeldetag: 07.04.2001
(51) Int. Cl.: G05B 19/042

(54) **Steuerung für mehrere miteinander vernetzte Aktoren**

(30) Priorität: 06.07.2000 DE 10032950
(71) Anmelder: Firma Carl Freudenberg, 69469 Weinheim (DE)
(72) Erfinder: Diehl, Gregor, Dr., 23701 Eutin (DE)

(57) **Zusammenfassung**

Steuerung für mehrere miteinander vernetzte Aktoren wie Stellmotoren, Relais und dergl. insbesondere über ein Bus-System vernetzte Aktoren dadurch gekennzeichnet, das jeder Aktor ein autonomer Aktor ist, der als "virtueller Master" fungiert und der das gesamte Ablaufprogramm zum zeitlich und sequentiellen Ansteuern aller autonomen Aktoren enthält und der eine oder mehrere physikalische Größen steuert.

## Beschreibung

Es ist bekannt innerhalb von Prozessmodulen eine Funktionseinheit als "virtuellen Master" zu bestimmen, der neben der internen Funktions- und Positioniersteuerung der betreffenden Funktionseinheit zusätzlich die zeitliche und sequentielle Synchronisierung zwischen den verschieden Funktionseinheiten übernimmt. Für das zeitlich schnelle interne Abarbeiten der Signale sowie zum Minimieren der Steuerungsreaktionszeit melden die verschiedenen Funktionseinheiten ereignisgesteuert ihre Zustandsänderungen an den "virtuellen Master". Es gilt für die einzelnen Funktionseinheiten eine "Bring-Schuld" an den "virtuellen Master". Die von den einzelnen Funktionseinheiten zurückgemeldeten Zustandsänderungen, gegebenenfalls mit weiteren Signalen verknüpft, bilden die Weiterschaltbedingungen für den Zustandswechsel im Ablaufprogramm des "virtuellen Masters". In dem implementierten Softwareablauf des "virtuellen Master" sind die betreffenden erforderlichen Weiterschaltbedingungen mit deren Herkunft hinterlegt. Beim Übergang in den neuen Zustand wird eine Zustandsaktion ausgelöst. Diese Zustandsaktion stellt für die Basisfunktionen eine Beauftragung als Eingangsgröße in der Zustandsübergangsbedingung dar. Zu einem Zeitpunkt ist im Ablaufprogramm nur ein Zustand aktiv. Der aktuelle Zustand bleibt solange aktiv, bis eine vom Zustand wegführende Transition erfüllt ist und der Zustandswechsel erfolgt. Für das Erfüllen einer Weiterschaltbedingung im Ablaufprogramm kann eine oder mehrere Rückmeldungen von Basis-Funktionseinheiten erforderlich sein. Ebenso kann eine Zustandsaktion als Beauftragung von mehreren Basis-Funktionseinheiten dienen, wobei für jede einzelne Funktionseinheit ein Fahrprofil und gegebenenfalls die Richtung vorgegeben wird. Das Ablaufprogramm ist softwaremäßig implementiert.

Eine solche Steuerung hat den Nachteil, dass jede Zustandsänderung an den "virtuellen Master" übermittelt werden muss, der nur in einer vorgegebenen Zeitfolge die Signale abarbeiten kann.

### Darstellung der Erfindung

Der Erfindung liegt deshalb die Aufgabe zugrunde eine Steuerung zu schaffen die schneller arbeiten kann und trotzdem sicher die Reihenfolge des Steuerungsablaufs einhält.

Die Lösung der gestellten Aufgabe erfolgt durch die Merkmale des Anspruchs 1. Die Unteransprüche stellen vorteilhafte Weiterbildungen der Erfindung dar.

Bei der Verwirklichung der vorliegenden Erfindung fällt der "virtuelle Master" weg und jeder Aktor ist ein autonomer Aktor, der eigenständig als virtueller Master fungiert und der das gesamte Ablaufprogramm zum zeitlichen und sequentiellen Ansteuern aller Bewegungsfunktionen der autonomen Aktoren enthält und der eine oder mehrere physikalische Größen steuert. Dabei sind alle Aktoren über ein Bus-System miteinander vernetzt.

In Fortführung des Erfindungsgedankens werden die Aktoren nach Ausführung ihrer vorgegebenen Steuerungsaktion ereignisgesteuert alle Teilnehmer im Netzwerk über die Durchführung der Steuerungsaktion informieren, wonach eine erneute autonome Synchronisation aller Aktoren auf den neuen aktiven Zustand im Ablaufprogramm erfolgt und ein internes Anstoßen zum Steuern der zugewiesenen physikalischen Größe dient.

Abweichend vom bisherigen Verfahren mit einem virtuellen Master besitzt in dem neuen Verfahren mit dem intelligenten Netzwerk jede im Netzwerk vorhandene Funktionseinheit alle Informationen über das Ablaufprogramm zum sequentiellen und zeitlich richtigen Ansteuern der betreffenden Basisfunktionen. Die verschiedenen Funktionseinheiten übergeben ereignisgesteuert ihre Zustandsänderungen in einer Art Broadcast-Meldung an das gesamte Netzwerk und somit an alle im Netzwerk registrierten Funktionseinheiten-Teilnehmer. Die von den einzelnen Funktionseinheiten zurückgemeldeten Zustandsänderungen, gegebenenfalls mit weiteren Signalen verknüpft, bilden die Weiterschaltbedingungen für den Zustandswechsel in dem Ablaufprogramm. Alle Funktionseinheiten synchronisieren sich somit autonom auf den neuen aktuellen aktiven Zustand im Ablaufprogramm und bewirken in der jeweiligen Funktionseinheit das interne Anstoßen der zugehörigen Basisfunktion. Alle Funktionseinheiten besitzen zu jedem Zeitpunkt das Wissen über den momentan aktiven Zustand im Ablauf. Das für alle Funktionseinheiten allgemeingültige Ablaufprogramm, sowie die für die betreffenden Funktionseinheiten spezifischen Basisfunktionen werden einmalig bei der Installation und Inbetriebnahme des Netzwerkes konfiguriert und als Download an alle im Netzwerk registrierten Funktionseinheiten übergeben.

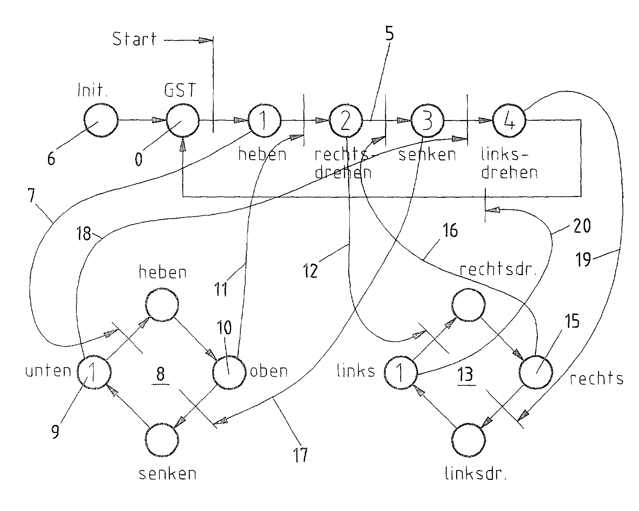

Anhand des in der Zeichnung dargestellten Ausführungsbeispiels wird die Erfindung näher erläutert.

### Die Figur zeigt schematisch den Ablauf eines Steuerungsvorgangs

In der Figur sind mehrere Zustände 0, 1, 2, 3 und 4 von Funktionseinheitendargestellt, die als Aktoren dienen und alle über ein Bus-System 5 miteinander verknüpft sind. Nach Einschalten der Steuerung über den Schalter 6 wird durch den Zustand 0 die Grundstellung der Steuerung eingenommen. In einer vorgegebenen Zeitspanne wird beispielsweise das Signal "Heben" ausgesendet, welches von Zustand 1 aufgenommen und von dort über das Signal 7 an einen entsprechenden Stellmotor 8 weitergegeben wird. Der Motor 8 befindet sich in einer unteren Lage 9. Nach Durchführung des Befehls "Heben" erreicht er seine obere Lage 10. Diese Stellung wird über das Signal 11 wieder dem Bus-System 5 mitgeteilt und der nächste Schaltvorgang kann erfolgen. Hierfür wird beispielsweise die Funktionseinheit 2 aktiviert, die eine Rechtsdrehung auszuführen hat. Über das Signal 12 wird der Befehl an den Stellmotor 13 weitergegeben und es folgt eine Rechtsdrehung. Nachdem die Rechtsdrehung ausgeführt worden ist und die Stellung gemäß 15 erreicht ist, wird dieses zurückgemeldet über das Signal 16 an das Bus-System 5. Als weiterer Schritt ist beispielsweise ein Senkvorgang vorgesehen über die Funktionseinheit 3, welche dies über das Signal 17 dem Stellmotor 8 mitteilt. Nach Ausführung des Senkvorgangs wird über das Signal 18 die Ausführung des Befehls an das Bus-System 5 zurückgemeldet. Hiernach tritt die Funktionseinheit 4 in Tätigkeit, welche die Linksdrehung steuert und teilt dieses über das Signal 19 dem Stellmotor 13 mit. Dort wird die Linksdrehung ausgeführt und dieses über das Signal 20 dem Bus-System 5 mitgeteilt. Nach Durchführung aller Steuersignale ist wieder die Grundstellung Null erreicht.

Jede Funktionseinheit 0 bis 4 arbeitet für sich autonom und führt dann einen Zustandswechsel aus, wenn alle zu einer Transition gehörenden Übergangsbedingungen erfüllt sind. Bei einem Wechsel in einen neuen Zustand wird eine Aktion im neu angenommenen Zustand ausgeführt. Die Zustandsausgaben stellen Beauftragungen an die Funktions- oder Positioniersteuerung dar und übergeben entweder die anzufahrende Position mit den dazugehörigen Verfahrwerten oder wählen in der Positoniersteuerung ein hinterlegtes Fahrprofil in einer gespeicherten Fahrprofilliste aus. Die Zustände der Funktionseinheiten werden in statische und dynamische Zustände unterschieden. Das Ansteuern der Aktoren erfolgt nur in den dynamischen Zuständen. In den statischen Zuständen werden automatisch alle Aktoren zurückgesetzt beziehungsweise nicht angesteuert. Sind nicht alle Weiterschaltbedingungen einer Transition erfüllt, so verbleibt die Funktionseinheit im aktuell vorliegenden Zustand. In einer Funktionseinheit ist zu einem Zeitpunkt nur ein Zustand aktiv.

Bevor ein Zustandswechsel ausgeführt wird, wird von der Funktionseinheit eine Plausibilitätsüberprüfung auf widersprüchliche Signalkombinationen durchgeführt. Defekte Initiatoren oder äußere Beeinflussung der Initiatoren werden somit detektiert. Das Erkennen eines Fehlers überführt den Antrieb in einen sicheren Zustand und blockiert das Ausführen einer Aktion bzw. ermöglicht nur eine eingeschränkte Verfahrbewegung.

## Patentansprüche

1. Steuerung für mehrere miteinander vernetzte Aktoren wie Stellmotoren, Relais und dergl. insbesondere über ein Bus-System vernetzte Aktoren **dadurch gekennzeichnet**, das jeder Aktor (8, 13) ein autonomer Aktor ist, der als "virtueller Master" fungiert und der das gesamte Ablaufprogramm zum zeitlich und sequentiellen Ansteuern aller Bewegungsfunktionen der autonomen Aktoren (8, 13) enthält und der eine oder mehrere physikalische Größen steuert.

2. Steuerung nach Anspruch 1 **dadurch gekennzeichnet, dass** die Aktoren (8, 13) nach Ausführung ihrer vorgegebenen Steuerungsaktion ereignisgesteuert alle Teilnehmer im Netzwerk über die Durchführung der Steuerungsaktion informieren, wonach eine erneute autonome Synchronisation aller Aktoren (8, 13) auf den neuen aktiven Zustand im Ablaufprogramm erfolgt und ein internes Anstoßen zum Steuern der zugewiesenen physikalischen Größe dient.
